# EUROPÄISCHE PATENTSCHRIFT

(11) **EP 2 596 931 B1**
(45) Veröffentlichungstag und Bekanntmachung des Hinweises auf die Patenterteilung: **02.08.2017**
(21) Anmeldenummer: 12450050.5
(22) Anmeldetag: 28.11.2012
(51) Int. Cl.: B29B 11/16, B29C 70/54

(54) **VERFAHREN SOWIE FORMWERKZEUG ZUR HERSTELLUNG EINES RÄUMLICHEN FLÄCHENGEBILDES**
METHOD AND MOULDING TOOL FOR PRODUCING A SPATIAL FABRIC SHEET
PROCÉDÉ ET OUTIL DE FORMAGE POUR LA FABRICATION D'UNE STRUCTURE DÉFORMÉE DANS L'ESPACE

(30) Priorität: 28.11.2011 AT 17532011
(43) Veröffentlichungstag der Anmeldung: 29.05.2013
(73) Patentinhaber: Alba Tooling & Engineering GmbH, 5552 Forstau (AT)
(72) Erfinder: Moser, Andreas, 5541 Altenmarkt (AT); Simonlehner, Gernot, 8972 Ramsau am Dachstein (AT)
(74) Vertreter: Keschmann, Marc

(56) Entgegenhaltungen:
- JP-A- 2004 322 442
- JP-A- 2011 110 899
- JP-A- 2011 168 009

## Beschreibung

Die Erfindung betrifft ein Verfahren sowie ein Formwerkzeug zur Herstellung eines räumlichen Flächengebildes durch Umformen einer flächenhaften, dehnungsarmen Tragstruktur zu einem Vorformling, wie dies in den Ansprüchen 1 und 17 beschrieben ist.

Aus der WO 2011/104980 A1 ist ein Formwerkzeug mit einem unteren sowie oberen Formteil bekannt geworden, bei dem einer der Formteile in mehrere Formteilsegmente unterteilt ist. Die Erwärmung der Tragstruktur kann dabei durch die Aufteilung in mehrere Formteilsegmente gezielter durchgeführt werden. Jedoch konnte bei komplexeren Raumformen des herzustellenden Bauteils kein zufriedenstellendes Ergebnis bei der Umformung der Tragstruktur erzielt werden.

Ein ähnliches Formwerkzeug ist aus der JP2004322442 bekannt. Der vorliegenden Erfindung liegt die Aufgabe zugrunde, ein Verfahren anzugeben sowie ein Formwerkzeug zu schaffen, bei dem die zu verformende Tragstruktur nahezu faltenfrei an die Formflächen der Formteile des Formwerkzeuges angelegt und in dieser verformten Stellung diese räumliche Formgebung durch die Behinderung fixiert gehalten werden kann.

Eine Aufgabe der Erfindung wird durch ein Verfahren zur Herstellung eines räumlichen Flächengebildes durch Umformen einer flächenhaften, dehnungsarmen Tragstruktur zu einem Vorformling gemäß den im Anspruch 1 angegebenen Merkmalen gelöst. Die sich aus der Merkmalskombination dieses Anspruches ergebenden Vorteile liegen darin, dass die zu verformende Tragstruktur je nach der herzustellenden Raumform des herzustellenden Bauteils in einer vorgespannten Lage distanziert zu der Formfläche des betreffenden Formteils positioniert gehalten ist. Dadurch wird bereits am Beginn des Verformungsvorganges sichergestellt, dass die Tragstruktur eine faltenfreie Ausgangslage einnimmt. Durch den speziell gewählten Beginn des Umformvorganges hin auf die höchste Erhebung der Formfläche bzw. des der gespannten Tragstruktur am nächsten liegenden Längsverlaufs der Erhebung, wird in diesem Bereich eine vordefinierte Anlage der Tragstruktur an der jeweiligen Formfläche bzw. deren Formflächenabschnitten erzielt. Je nach dem Längsverlauf der höchsten Erhebung des herzustellenden Gegenstandes im Formteil sind auch die die Tragstruktur haltenden bzw. spannenden Haltevorrichtungen seitlich beabstandet zu diesem Längsverlauf angeordnet. Damit wird eine seitliche Versetzung in Querrichtung bezüglich des Längsverlaufes der höchsten Erhebung des oder der entsprechenden Formflächenabschnitte erzielt. Durch diesen gewählten Verfahrensschritt erfolgt am Beginn des Umformvorganges eine geringe Verformung der Tragstruktur hin zum entsprechenden Formflächenabschnitt der Formfläche, wobei in darauf nachfolgenden, weiteren Verformungsschritten die weitere Anlage der Tragstruktur an die jeweiligen weiteren Formflächenabschnitte erfolgt. Damit wird sichergestellt, dass durch den gewählten ersten Verstellvorgang eine Anlage der zu verformenden Tragstruktur an der höchsten Erhebung der Formflächen erfolgt und anschließend die Tragstruktur in jene Bereiche hineinverformt wird, deren Abstand hin zur unverformten, gespannten Tragstruktur größer ist.

Weiters ist ein Vorgehen gemäß den im Anspruch 2 angegebenen Merkmalen vorteilhaft, weil dadurch ein individueller Ablauf der einzelnen Verstellvorgänge gewählt werden kann. Darüber hinaus kann dabei die Anordnung des Formwerkzeugs in größeren Anlagen oder Pressen unterbleiben, da jedem der einzelnen Formteilsegmente zumindest ein eigenes Antriebsorgan zugeordnet ist, mit welchem die individuelle, unabhängige Verstellung ermöglicht wird.

Eine weitere vorteilhafte Vorgehensweise ist im Anspruch 3 beschrieben, wodurch trotz der Aufteilung des Formteils in mehrere Formteilsegmente diese zu einer Baugruppe vereint und zusätzlich zueinander positioniert angeordnet werden können.

Vorteilhaft ist auch eine Verfahrensvariante gemäß Anspruch 4, weil dadurch einerseits die Möglichkeit geschaffen wird, die einzelnen Formteilsegmente des ersten Formteils an einer gemeinsamen Trageinheit anzuordnen und trotzdem dabei ausreichen Platz für die Hantierung der Tragstruktur bzw. des daraus hergestellten Vorformlings zur Verfügung zu haben.

Weiters ist ein Vorgehen gemäß den im Anspruch 5 angegebenen Merkmalen vorteilhaft, weil so für eines der Formteilsegmente zwischen der Tragplatte und dem ersten Formteil eine zweischnittige Lagerung erzielbar ist, wodurch das erste Formteilsegment noch exakter geführt verstellt werden kann.

Eine weitere vorteilhafte Vorgehensweise ist im Anspruch 6 beschrieben, wodurch zusätzlich zu den jeweils dem oder den Formteilsegmenten zugeordneten, eigenen Antriebsorganen eine erste Führungsmöglichkeit geschaffen wird. Damit kann vom Beginn an des Verstellvorganges eine ausreichende Führungsgenauigkeit erzielt werden.

Vorteilhaft ist auch eine Verfahrensvariante gemäß Anspruch 7, weil dadurch auch bei einer größeren Distanzierung der weiteren Formteilsegmente von der Tragplatte auch bei Annäherung derselben an die Formfläche des zweiten Formteils eine zusätzliche exakte Führung der einzelnen Formteilsegmente erzielt werden. Dies deshalb, da das erste Formteilsegment bereits mit einer sehr exakten Linearführung ausgerüstet ist.

Weiters ist ein Vorgehen gemäß den im Anspruch 8 angegebenen Merkmalen vorteilhaft, weil dadurch eine gewisse Vorpositionierung der Tragstruktur an der Formfläche des Formteils erfolgt und so bereits am Beginn des Umformvorganges in Verbindung mit der Vorspannung der Tragstruktur eine faltenfreie Anlage der Tragstruktur zumindest am ersten Formflächenabschnitt des zweiten Formteils erzielbar ist.

Eine weitere vorteilhafte Vorgehensweise ist im Anspruch 9 beschrieben, wodurch in Abhängigkeit von der herzustellenden Raumform des Bauteils die weitere faltenfreie Anlage der Tragstruktur an die jeweiligen weiteren Formflächenabschnitte erreicht werden kann. Je nach Lage des ersten Formflächenabschnitts, an welchem die Tragstruktur angelegt worden ist, wird die gespannte Tragstruktur an die unmittelbar benachbarten, weiteren Formflächenabschnitte schrittweise angelegt. Dabei kann die weitere Verstellung der Formteilsegmente ausgehend vom ersten Formteilsegment schrittweise hin zu den beiden Haltevorrichtungen erfolgen.

Vorteilhaft ist auch eine Verfahrensvariante gemäß Anspruch 10, weil dadurch eine individuellere Halterung der Tragstruktur in deren Längsrandabschnitten ermöglicht wird.

Weiters ist ein Vorgehen gemäß den im Anspruch 11 angegebenen Merkmalen vorteilhaft, weil dadurch je nach benötigter Abmessung der Tragstruktur eine individuelle Verlagerung der einzelnen Halteelemente möglich ist und trotzdem die Tragstruktur weiter mit einer gewissen Vorspannung gehalten wird. Damit wird es möglich, durch die Kombination der Verstellbewegung der weiteren Formteilsegmente in Verbindung mit der vorgespannten Tragstruktur diese auch an die weiteren Formflächenabschnitte des zweiten Formteils anlegen zu können.

Eine weitere vorteilhafte Vorgehensweise ist im Anspruch 12 beschrieben, wodurch eine noch individuellere Nachgiebigkeit der einzelnen Halteelemente geschaffen wird. Dadurch ist auch bei komplexeren, räumlichen Flächen eine nahezu bis vollständig, faltenfreie Anlage der Tragstruktur über die gesamte Formfläche erzielbar.

Vorteilhaft ist auch eine Verfahrensvariante gemäß Anspruch 13, weil dadurch der Verformungsvorgang noch besser auf den Werkstoff der zu verformenden Tragstruktur sowie deren Bebinderung Rücksicht genommen werden kann. Damit kann auf unterschiedlichste Anwendungsbedingungen einfach Rücksicht genommen werden.

Weiters ist ein Vorgehen gemäß den im Anspruch 14 angegebenen Merkmalen vorteilhaft, weil dadurch auf zusätzliche Heizvorrichtungen verzichtet werden kann. Damit wird es möglich, das Formwerkzeug einfacher zu gestalten und trotzdem die verformte Tragstruktur in der umgeformten Position fixieren zu können.

Eine weitere vorteilhafte Vorgehensweise ist im Anspruch 15 beschrieben, wodurch so über die gesamte Fläche bzw. den Querschnitt der Tragstruktur ein gleichmäßigerer Stromfluss der elektrischen Energie erzielt wird. Dadurch kann eine nahezu durchgehende, gleichmäßige Erwärmung und damit verbunden ein durchgängiges Erweichen der Behinderung erzielt werden.

Vorteilhaft ist auch eine Verfahrensvariante gemäß Anspruch 16, weil dadurch auf zusätzliche Bauelemente verzichtet werden kann und damit nicht nur die Halterung und Vorspannung der Tragstruktur sondern auch gleichzeitig damit bei entsprechender Beaufschlagung mit elektrischer Energie mit wenigen Bauelementen das Auslangen gefunden werden kann.

Die Aufgabe der Erfindung kann aber auch unabhängig davon eigenständig durch die Merkmale des Anspruches 17 gelöst werden.

Der sich durch die Merkmale des Anspruches 17 ergebende Vorteil liegt darin, dass die zu verformende Tragstruktur je nach der herzustellenden Raumform des herzustellenden Bauteils in einer vorgespannten Lage distanziert zu der Formfläche des betreffenden Formteils positioniert gehalten ist. Dadurch wird bereits am Beginn des Verformungsvorganges sichergestellt, dass die Tragstruktur eine faltenfreie Ausgangslage einnimmt. Durch den speziell gewählten Beginn des Umformvorganges hin auf die höchste Erhebung der Formfläche bzw. des der gespannten Tragstruktur am nächsten liegenden Längsverlaufs der Erhebung, wird in diesem Bereich eine vordefinierte Anlage der Tragstruktur an der jeweiligen Formfläche bzw. deren Formflächenabschnitten erzielt. Je nach dem Längsverlauf der höchsten Erhebung des herzustellenden Gegenstandes im Formteil sind auch die die Tragstruktur haltenden bzw. spannenden Haltevorrichtungen seitlich beabstandet zu diesem Längsverlauf angeordnet. Damit wird eine seitliche Versetzung in Querrichtung bezüglich des Längsverlaufes der höchsten Erhebung des oder der entsprechenden Formflächenabschnitte erzielt. Durch diesen gewählten Verfahrensschritt erfolgt am Beginn des Umformvorganges eine geringe Verformung der Tragstruktur hin zum entsprechenden Formflächenabschnitt der Formfläche, wobei in darauf nachfolgenden, weiteren Verformungsschritten die weitere Anlage der Tragstruktur an die jeweiligen weiteren Formflächenabschnitte erfolgt. Damit wird sichergestellt, dass durch den gewählten ersten Verstellvorgang eine Anlage der zu verformenden Tragstruktur an der höchsten Erhebung der Formflächen erfolgt und anschließend die Tragstruktur in jene Bereiche hineinverformt wird, deren Abstand hin zur unverformten, gespannten Tragstruktur größer ist.

Vorteilhaft ist auch eine weitere Ausführungsform nach Anspruch 18, weil dadurch eine noch individuellere Nachgiebigkeit der einzelnen Halteelemente geschaffen wird. So ist auch bei komplexeren, räumlichen Flächen eine nahezu bis vollständige, faltenfreie Anlage der Tragstruktur über die gesamte Formfläche erzielbar.

Vorteilhaft ist weiters eine Ausbildung nach Anspruch 19, da dadurch eine individuelle Verlagerung des Halteelementes bezüglich des ersten Formteils des Formwerkzeugs erzielbar ist.

Schließlich ist aber auch eine Ausbildung, wie im Anspruch 20 beschrieben, möglich, weil dadurch ein individueller Ablauf der einzelnen Verstellvorgänge gewählt werden kann. Darüber hinaus kann dabei auf die Anordnung des Formwerkzeugs in größeren Anlagen oder Pressen unterbleiben, da jedem der einzelnen Formteilsegmente zumindest ein eigenes Antriebsorgan zugeordnet ist, mit welchem die individuelle Verstellung ermöglicht wird.

Zum besseren Verständnis der Erfindung wird diese anhand der nachfolgenden Figuren näher erläutert.

Es zeigen jeweils in stark schematisch vereinfachter Darstellung:
Fig. 1 ein Formwerkzeug in geöffneter Stellung der Formteile sowie teilweise entfernten Verbindungsstehern, in schaubildlicher Darstellung;
Fig. 2 den oberen Formteil des Formwerkzeugs nach Fig. 1, in Ansicht von unten;
Fig. 3 einen Teilbereich des Formwerkzeugs nach den Fig. 1 und 2 mit einem einzigen Formteilsegment des oberen Formteils noch vor dem Beginn des Umformvorganges, in Ansicht geschnitten;
Fig. 4 den Teilbereich des Formwerkzeugs nach Fig. 3, jedoch bei bereits verstelltem Formteilsegment, in Ansicht geschnitten;
Fig. 5 einen Teilbereich eines Halteelements der Haltevorrichtung für die Tragstruktur, in schaubildlicher Darstellung;
Fig. 6 das Halteelement nach Fig. 5, in einer weiteren schaubildlichen Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

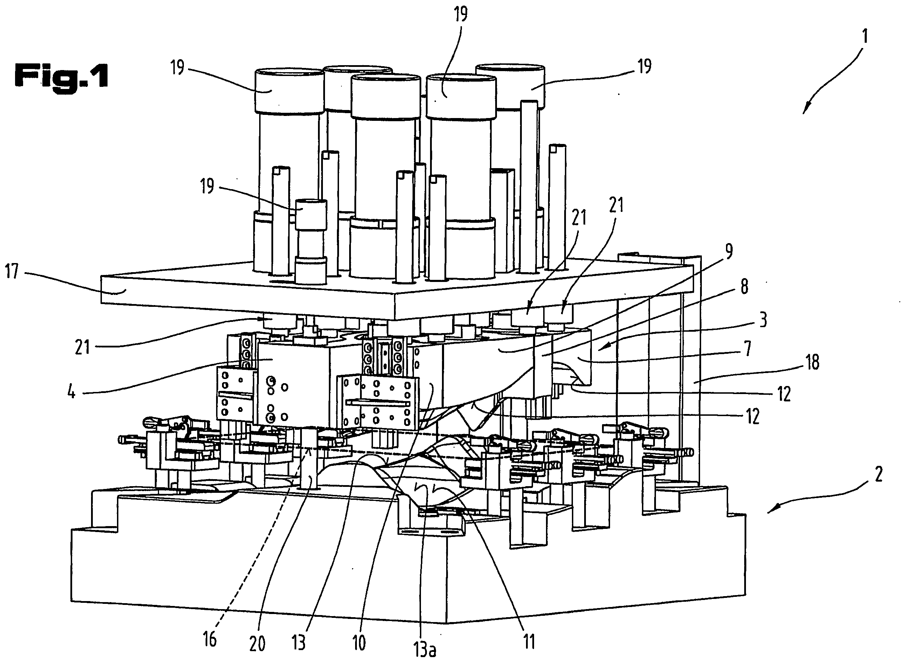

In den Fig. 1 bis 4 ist ein Formwerkzeug 1 gezeigt, welches aus mehreren Formteilen 2, 3 gebildet ist. Im vorliegenden Ausführungsbeispiel bildet ein erster Formteil 3 den oberen Teil und ein zweiter Formteil 2 den unteren Teil des Formwerkzeugs 1. Dabei sind die beiden Formteile 2, 3 des Formwerkzeugs 1 in bekannter Weise relativ zueinander verstellbar, wobei hier der zweite Formteil 2 als feststehender Formteil 2 und der erste Formteil 3 als dazu verstellbarer Formteil vorgesehen ist.

Der erste Formteil 3 ist seinerseits aus mehreren Formteilsegmenten 4 bis 10 gebildet, um so die später noch detailliert beschriebene Formgebung durchführen zu können. Die beiden Formteile 2, 3 weisen ihrerseits jeweils räumlich geformte Formflächen 11, 12 auf, welche wiederum mehrere Formflächenabschnitte 13, 13a, 14 umfassen können. Das Formwerkzeug 1 ist, dabei von einer Öffnungsstellung hin zu einer Schließstellung verstellbar. In der Schließstellung wird zwischen den Formflächen 11, 12 ein Formhohlraum in bekannter Weise ausgebildet, welcher zur formgebenden Gestaltung des herzustellenden Werkstücks, insbesondere eines Vorformlings, dient. Das hier gezeigte Formwerkzeug 1 dient zur Herstellung von räumlichen Flächengebilden durch Umformung einer flächenhaften Tragstruktur 16 zu einem hier nicht näher dargestellten Vorformling. Die Tragstruktur 16 kann ihrerseits aus den unterschiedlichsten Werkstoffen sowie in unterschiedlichster Machart ausgebildet sein. Dabei können sowohl Fäden als auch Fasern Anwendung finden und diese in den unterschiedlichsten Gewirken, Geflechten, Gestricken, Geweben, Gelegen oder dergleichen angeordnet bzw. ausgebildet sein. Werden die Werkstoffe beispielsweise als Fasern verwendet, können diese durch Kohlefasern, Glasfasern, Naturfasern, Mineralfasern oder Kunststofffasern gebildet sein. Die zuvor beschriebenen Faserwerkstoffe können aber auch als Fäden in durchlaufender bzw. endloser Gestalt Anwendung finden.

Bevorzugt wird die Tragstruktur 16 aus einem dehnungsarmen, insbesondere dehnungsfesten oder dehnungssteifen Werkstoff gebildet, wobei hier Kohle- oder Glaswerkstoffe Anwendung finden können. Es wären aber auch metallische Werkstoffe und dabei Eisenmetalle und/oder Nichteisenmetalle zur Bildung der Fäden oder Fasern denkbar. Je nach gewähltem Werkstoff sowie der Wahl der Machart der Tragstruktur 16 kann diese mehr oder weniger nachgiebig bis hin zu nahezu dehnungsfest bzw. dehnungssteif ausgebildet sein.

Je nach Werkstoffwahl zur Bildung der Tragstruktur 16 wird diese noch vor dem Umformvorgang mit einer sogenannten Bebinderung versehen. Darunter wird ein Bindemittel verstanden, welches auf unterschiedlichste Art und Weise auf die Tragstruktur 16 aufgebracht werden kann. Als Werkstoffe für die Behinderung können hier thermoplastische und/oder duroplastische Kunststoffe Anwendung finden. Das Aufbringen kann beispielsweise durch Aufsprühen, Aufwalzen, Aufdampfen, Tränken oder ähnlicher Vorgänge erfolgen, welche auch miteinander kombiniert werden können. Gleichfalls wäre es aber auch noch möglich, ein entsprechend ausgerüstetes Faden- oder Fasermaterial mit in die Tragstruktur 16 einzubringen, wobei hier die Möglichkeit besteht, entsprechende zusätzliche Fäden oder Fasern vorzusehen, welche zwischen den die Tragstruktur 16 bildenden Fäden oder Fasern angeordnet sind. Diese zusätzlichen Fäden oder Fasern weisen dabei eine niedrigere Schmelz- bzw. Erweichungstemperatur auf als die die Tragstruktur 16 bildenden Fäden oder Fasern. Durch entsprechend gewählte Temperatureinbringung und dem damit verbundenen Erweichen der zusätzlichen Fäden oder Fasern kann nach der Wärmeeinbringung der erweichte Werkstoff wiederum soweit verfestigt werden, dass die Tragstruktur 16 in der räumlich verformten Position fixiert gehalten wird.

Das Erweichen der auf die Tragstruktur 16 aufgebrachte bzw. der mit der Tragstruktur 16 versehene Behinderung kann bereits vor der Durchführung des Umformvorganges und/oder erst während des Umformvorganges und/oder nach Beendigung des Umformvorganges erfolgen. Je nach gewähltem Werkstoff zur Bildung der Tragstruktur 16 und der dabei verwendeten Behinderung kann es vorteilhaft sein, wenn das Erweichen und/oder das Verfestigen der Tragstruktur 16 erst nach Beendigung des Umformvorganges bei geschlossenem Formwerkzeug 1 erfolgt.

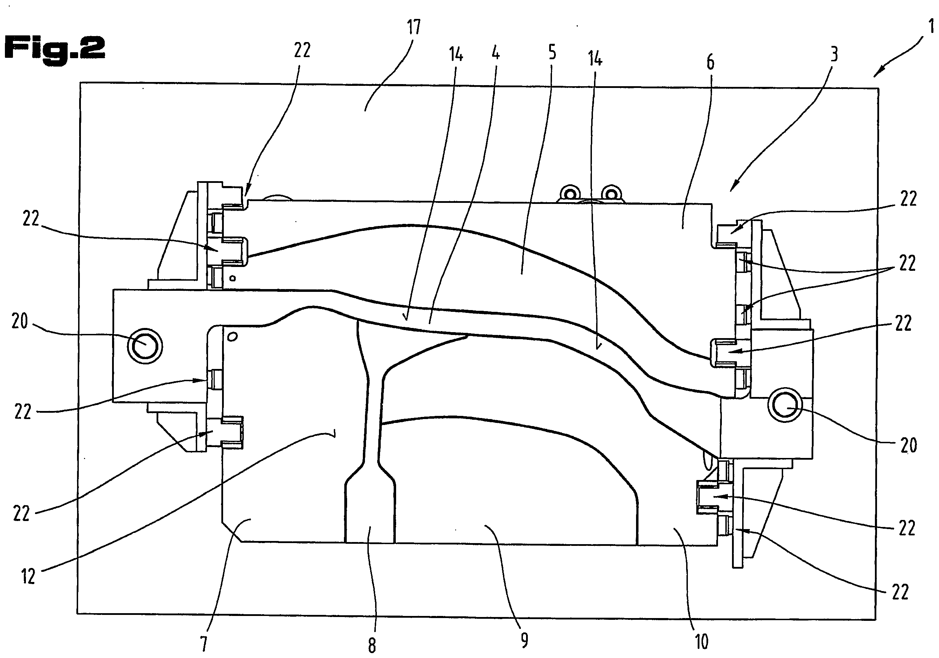

Wie aus einer Zusammenschau der Fig. 1 und 2 zu ersehen ist, ist der ersteFormteil 3 durch die zuvor bereits beschriebenen Formteilsegmente 4 bis 10 gebildet. Die Aufteilung des ersten Formteils 3 in mehrere Formteilsegmente 4 bis 10 ist von der Raumform des herzustellenden Werkstücks abhängig und kann frei gewählt werden. Bei räumlich gekrümmten Werkstückoberflächen wird in Abhängigkeit von der Raumform des herzustellenden Werkstücks die Abfolge der relativen Verstellung der einzelnen Formteilsegmente 4 bis 10 des ersten Formteils 3 hin zum zweiten Formteil 2 individuell festgelegt und schrittweise durchgeführt.

Dazu umfasst das Formwerkzeug 1 im Bereich des ersten Formteils 3 mit seinen Formteilsegmenten 4 bis 10 zumindest eine gemeinsame Tragplatte 17, welche als Aufnahme und Abstützung für die einzelnen Formteilsegmente 4 bis 10 dient. Bevorzugt wird die Tragplatte 17 an der vom ersten Formteil 3 abgewendeten Seite bezüglich des zweiten Formteils 2 angeordnet und zumeist feststehend mit dem zweiten Formteil 2 verbunden. Dies kann durch in der Fig. 1 nur an der Hinterseite des Formwerkzeuges 1 dargestellte Steher 18 erfolgen. Es wäre aber auch möglich, anstatt der Steher 18 zur Halterung der Tragplatte 17 am zweiten Formteil 2 eine relativ verstellbare Anordnung vorzusehen, mit welcher die Tragplatte 17 gemeinsam mit den daran gehalterten Formteilsegmenten 4 bis 10 des ersten Formteils 3 dazu verstellbar ist. Dies könnte beispielsweise dann von Vorteil sein, wenn für das Anbringen und Positionieren der Tragstruktur 16 für die Formgebung und/oder die nachfolgende Entnahme des Vorformlings aus dem Formwerkzeug 1 ein größerer Platzbedarf von Nöten ist.

Die Formteilsegmente 4 bis 10 des ersten Formteils 3 sind an der gemeinsamen Tragplatte 17 relativ verstellbar bezüglich der Tragplatte 17 an dieser gehaltert. Um eine individuelle Verlagerung jedes einzelnen der Formteilsegmente 4 bis 10 durchführen zu können, kann jedem der Formteilsegmente 4 bis 10 zumindest ein eigenes Antriebsorgan 19 zugeordnet und mit diesem verbunden sein. Damit wird es möglich, jedes einzelne der Formteilsegmente 4 bis 10 unabhängig voneinander relativ bezüglich des zweiten Formteils 2 zu verstellen bzw. zu verlagern. Diese Verstellbewegung erfolgt zumeist in einer Linearbewegung.

Um eine exakt geführte Verstellbewegung zumindest eines der Formteilsegmente 4 bis 10 zu erzielen, ist noch dargestellt, dass das erste Formteilsegment 4 im Bereich seiner beiden, dem zweiten Formteil 2 als auch der Tragplatte 17 zugewendeten Seiten zumindest eine Linearführung 20 zugeordnet ist. Bevorzugt wird jedoch das erste Formteilsegment 4 durch zwei derartige Linearführungen 20 an jeweils voneinander abgewendeten Seiten geführt, um so eine exakte Verstellbewegung des ersten Formteilsegments 4 von seiner Öffnungsstellung bzw. Ruhestellung hin zur Schließstellung durchführen zu können. Dabei kann auch bei jeder der Linearführungen 20 von einer zweischnittigen Lagerung gesprochen werden, mit welcher es möglich wird über den gesamten Verstellweg eine exakte geradlinige Führungsbewegung zu erreichen.

Je nach Anzahl der weiteren Formteilsegmente 5 bis 10 ist hier noch vorgesehen, dass jedem der weiteren Formteilsegmente 5 bis 10 jeweils zumindest eine eigene an der Tragplatte 17 gehaltene, weitere Linearführung 21 zugeordnet ist, mit welcher das jeweilige weitere Formteilsegment 5 bis 10 geführt gelagert ist. Um auch bei einem größeren Abstand bezogen auf die Tragplatte 17 während des Verstellweges der einzelnen weiteren Formteilsegmente 5 bis 10 eine ausreichende Führungsgenauigkeit zu erzielen, kann das zumindest eine weitere Formteilsegment 5 bis 10 über zumindest eine weitere Führungsanordnung 22 am ersten Formteilsegment 4 in linearer Richtung geführt sein. Dadurch wird auch bei längeren Verstellwegen der weiteren Formteilsegmente 5 bis 10 eine ausreichend genaue Führung zumindest zwischen einzelnen der Formteilsegmenten 4 bis 10 erzielt.

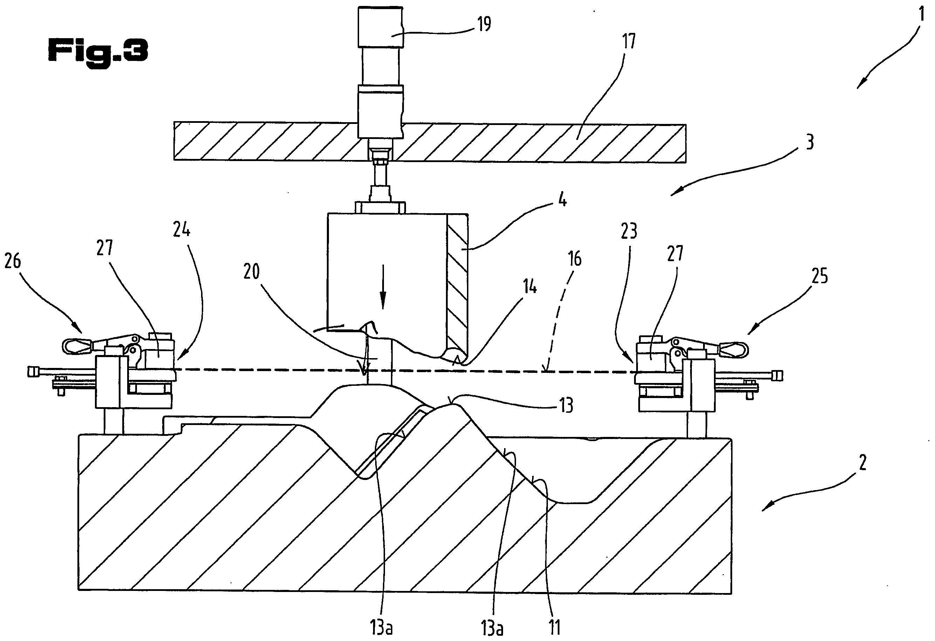

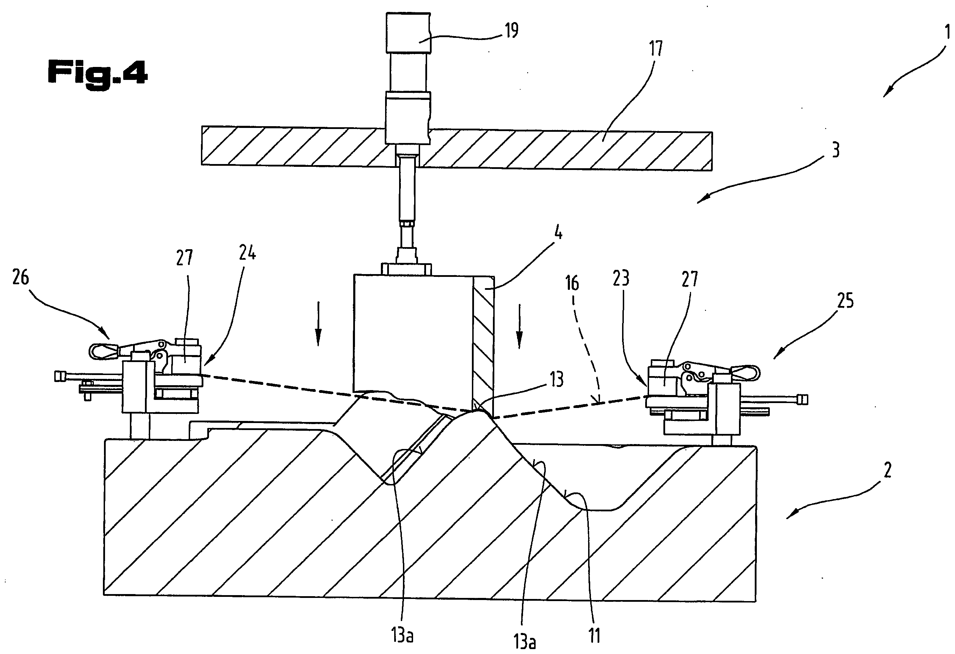

Wie nun besser aus einer Zusammenschau der Fig. 3 und 4 zu ersehen ist, wird hier anhand des ersten Formteilsegments 4 der schrittweise Verformungsvorgang der flächenhaften Tragstruktur 16 schematisch vereinfacht dargestellt. Der besseren Übersichtlichkeit halber ist dabei nur das erste Formteilsegment 4 dargestellt, mit welchem der Verstellvorgang und der damit einhergehende Umformvorgang begonnen wird. Die weiteren Formteilsegmente 5 bis 10 sind weggelassen worden. Dabei bildet das zweite Formteil 2 die zuvor beschriebene räumliche Formfläche 11 aus, welche je nach herzustellender Raumform im Formteil 2 Erhöhungen sowie Vertiefungen bzw. Berge und Täler aufweist.

Weiters ist in der Fig. 3 noch vereinfacht dargestellt, dass die Tragstruktur 16 vor deren Umformvorgang an zumindest zwei bezüglich des zweiten Formteils 2 gegenüberliegenden Längsrandabschnitten 23, 24 mittels Haltevorrichtungen 25, 26 nahezu ebenflächig gespannt gehalten ist. Dabei sei bemerkt, dass auch die Tragstruktur 16 nur beispielhaft durch eine einzige strichlierte Linie angedeutet ist, wobei die Tragstruktur 16 bevorzugt durch mehrere übereinander angeordnete Lagen gebildet sein kann. Dabei kann zusätzlich noch bei den einzelnen Lagen der Längsverlauf bzw. die Orientierung der Fäden bzw. Fasern zueinander je nach Anforderung des herzustellenden Werkstücks bzw. Bauteils unterschiedlich gewählt werden. Weiters ist auch eine Kombination der zuvor beschriebenen unterschiedlichen Werkstoffe möglich.

So ist in der Fig. 3 die Tragstruktur 16 in deren unverformten, gespannten Stellung gezeigt und das erste Formteilsegment 4 befindet sich noch in der Öffnungsstellung bzw. Ruhestellung. Die so gehaltene und bevorzugt gespannte Tragstruktur 16 definiert eine Tragstrukturebene, welche anschließend als Bezugsebene für die zuvor beschriebenen Oberflächenformen der räumlich geformten Formfläche 11 dient. Dabei wird für den Beginn des Umformvorganges der Tragstruktur 16 jenes erste Formteilsegment 4 des ersten Formteils 3 gewählt, welchem ein erster Formflächenabschnitt 13 des zweiten Formteils 2 bezüglich der unverformt gespannt gehaltenen Tragstruktur 16 am nächstenliegend angeordnet ist. Dies bedeutet, dass dabei jenes erste Formteilsegment 4 für den Beginn des Umformvorganges der Tragstruktur 16 gewählt wird, bei welchem die höchste Erhebung der gesamten Formfläche 11 des zweiten Formteils 2 der gespannten Tragstruktur 16 am nähesten liegt. Dies ist im vorliegenden Fall der ca. in der Mitte des zweiten Formteils 2 gelegene Berg bzw. die Erhöhung der Formfläche 11 mit ihrem Formflächenabschnitt 13.

In der Fig. 4 ist die verstellte Lage des ersten Formteilsegments 4 gezeigt, mit welchem die Tragstruktur 16 an den Formflächenabschnitt 13 der Formfläche 11 des zweiten Formteils 2 angelegt ist. Anschließend an diesen ersten Verstellvorgang werden die weiteren Formteilsegmente 5 bis 10 in der dafür vorgesehenen Reihenfolge hin auf die Formfläche 11 bzw. der weiteren Formflächenabschnitte 13a verstellt, um so die nahezu faltenfreie Anlage der Tragstruktur 16 an der gesamten Formfläche 11 des zweiten Formteils 2 zu erreichen.

Durch die erste Verstellung des ersten Formteilsegments 4 hin in Richtung zum zweiten Formteil 2 wird die Tragstruktur 16 zwischen den einander gegenüberliegenden Formflächenabschnitten 13, 14 positioniert gehaltert. Damit wird erreicht, dass die Tragstruktur 16 im Bereich der höchsten Erhebung der Formfläche 11 des zweiten Formteils 2 fixiert gehalten ist und die nachfolgenden Umformvorgänge durch entsprechendes Anlegen bzw. Hineinziehen an jene Formflächenabschnitte 13a erfolgt, deren Abstand in senkrechter Richtung bezüglich der unverformt gespannt gehaltenen Tragstruktur 16 und der dabei definierten Tragstrukturebene größer ist als der Abstand des der Tragstruktur 16 am nähesten liegenden, ersten Formflächenabschnitts 13. Je nach herzustellender Raumform können bevorzugt die nachfolgenden Verstellvorgänge der weiteren Formteilsegmente 5 bis 10 ausgehend vom ersten Formteilsegment 4 hin zu den in den Längsrandabschnitten 23, 24 angeordneten Haltevorrichtungen 25, 26 erfolgen.

Da durch den Umformvorgang und das Anlegen der Tragstruktur 16 an die Formfläche 11 des zweiten Formteils 2 ein entsprechendes Ausmaß an Längserstreckung der Tragstruktur 16 notwendig ist, können die beiden Haltevorrichtungen 25, 26 jeweils durch mehrere in Richtung des jeweiligen Längsrandabschnittes 23, 24 der Tragstruktur 16 voneinander distanzierte Halteelemente 27 gebildet sein. Die Halteelemente 27 bzw. deren Anordnung am zweiten Formteil 2 ist am besten aus der Fig. 1 zu ersehen.

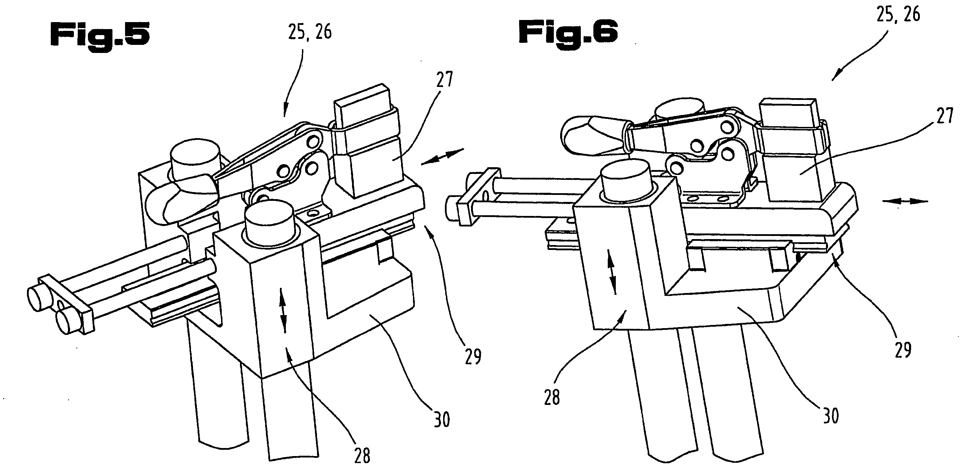

In den Fig. 5 und 6 ist noch vereinfacht dargestellt, dass jedes der Halteelemente 27 relativ und unabhängig voneinander verstellbar bezüglich des zweiten Formteils 2 an diesem gehaltert bzw. angeordnet sein kann. Dabei kann die Ausbildung der Haltevorrichtung 25, 26 mit den einzelnen Halteelementen 27 gegebenenfalls eine für sich eigenständige und unabhängige Lösung darstellen.

So ist hier jedes der einzelnen Halteelemente 27 relativ zum zweiten Formteil 2 gleichzeitig in mehrere Raumrichtungen verstellbar gelagert. Dazu können unterschiedlichste Führungsvorrichtungen 28, 29 vorgesehen sein. Diese sind bevorzugt zwischen dem Halteelement 27 und dem zweiten Formteil 2 angeordnet bzw. ausgebildet. Zusätzlich können auch noch nicht näher dargestellte Spann- bzw. Federelemente vorgesehen sein, mit welchen das Halteelement 27 über Zwischenschaltung der Führungsvorrichtungen 28, 29 in dessen Ausgangslage zurückverstellt werden. Dadurch werden die notwendigen Verstellwege erzielt, um die Umformung der Tragstruktur 16 ohne Beschädigung derselben durchführen zu können. Weiters können auch noch zusammenwirkende Anschlagelemente vorgesehen sein, um den zur Verfügung stehenden Verstellweg der Führungsvorrichtungen 28, 29 begrenzen zu können.

Bei diesem hier gezeigten Ausführungsbeispiel ist die ersten Führungsvorrichtung 28 als Linearführung ausgebildet, mit welcher das Halteelement 27 gegebenenfalls unter Zwischenschaltung eines Tragrahmens 30 in paralleler Richtung bezüglich der Verstellrichtung der Formteilsegmente 4 bis 10 verstellbar ist. Diese Linearführung kann aus den unterschiedlichsten, bekannten Maschinenelementen gebildet sein. Im vorliegenden Ausführungsbeispiel sind zwei Führungssäulen vorgesehen, an welchen der gemeinsame Tragrahmen 30 verstellbar geführt ist. Die weitere Führungsvorrichtung 29 ermöglicht eine Verstellbewegung des Halteelements 27 in paralleler Richtung bezüglich der durch die Tragstruktur 16 in ihrer unverformten, gespannten Ausgangslage definierten Tragstrukturebene.

Zusätzlich zu diesen beiden zuvor beschriebenen Verstellrichtungen wäre es aber auch noch möglich, das Halteelement 27 in weiteren Raumrichtungen relativ gegenüber dem zweiten Formteil 2 verlagern zu können. So könnte beispielsweise eine Schwenk- bzw. Drehbewegung des Halteelements 27 um eine senkrecht zur Tragstruktur 16 in deren unverformten Lage ausgerichtete Schwenkachse vorgesehen sein. Dies könnte beispielsweise dadurch erzielt werden, dass anstelle der beiden Führungssäulen nur eine einzige Führungssäule vorgesehen ist und so die Schwenkbewegung ermöglicht wird. Unabhängig davon wäre es aber auch möglich, das Halteelement 27 schwenkbar am Tragrahmen 30 zu lagern. Eine weitere Verschwenk- bzw. Verstellmöglichkeit des Halteelements 27 bestünde auch noch darin, die die Führungsvorrichtung 28 bildenden Führungsstangen selbst gelenkig am zweiten Formteil 2 zu lagern. Die dadurch ermöglichte Schwenkrichtung kann dabei entweder nur in einer Ebene liegen oder aber auch beispielsweise eine Verschwenkung in alle Raumrichtungen ermöglichen, ähnlich wie dies bei einem Kardangelenk möglich ist.

Je nach gewählter Lagerungsart des Halteelements 27 kann so während des Verformungsvorganges jedes der Halteelemente 27 voneinander unabhängig relativ zum ersten Formteil 2 gleichzeitig in mehrere Raumrichtungen verstellt werden.

Wie bereits zuvor beschrieben, kann die Tragstruktur 16 aus den unterschiedlichsten Werkstoffen sowie in unterschiedlichster Machart sowohl einlagig aber auch mehrlagig ausgebildet sein.

Wird beispielsweise die Tragstruktur 16 aus einem elektrisch leitfähigen Werkstoff, wie beispielsweise Kohlefasern, gebildet, kann das Erweichen der Behinderung durch Beaufschlagung der Tragstruktur 16 mit elektrischer Energie und Umwandlung derselben in thermische Energie erfolgen bzw. durchgeführt werden. Für diesen Vorgang ist ein entsprechender Werkstoff zur Bildung der Formteile 2, 3 zu wählen bzw. entsprechende Sicherheitsmaßnahmen zu treffen. Die Einleitung der elektrischen Energie in die Tragstruktur 16 kann beispielsweise durch die zuvor beschriebenen Haltelemente 27 der Haltevorrichtungen 25, 26 erfolgen. Um auch eine gleichmäßige Stromverteilung zwischen den in Richtung der Längsrandabschnitte 23, 24 voneinander distanziert angeordneten Halteelemente 27 zu erzielen, kann die Tragstruktur 16 zumindest im Bereich ihrer den Haltevorrichtungen 27 zugewendeten Längsrandabschnitte 23, 24 mit einem zusätzlichen nicht näher dargestellten, elektrisch leitenden Element versehen sein. Dazu wäre es möglich, die Längsrandabschnitte 23, 24 beispielsweise mit einer elektrisch leitenden Beschichtung, zusätzlichen elektrisch leitenden Fäden oder Fasern aus metallischen Werkstoffen, wie beispielsweise Kupfer oder Aluminium zu versehen. Dadurch könnte über die gesamte Fläche der Tragstruktur 16 eine bessere Verteilung des Stromflusses erzielt werden und so eine durchgängigere Erweichung der Behinderung erzielt werden. Die leitende Beschichtung könnte in Form eines Leitlackes entweder eigens aufgebracht und/oder mit in die Behinderung eingebracht werden. So wäre es möglich, die leitende Beschichtung auch vollflächig auf zumindest einzelne der die Tragstruktur 16 bildenden Lagen aufzubringen bzw. dies damit zu tränken.

Der Ordnung halber sei abschließend darauf hingewiesen, dass zum besseren Verständnis des Aufbaus des Formwerkzeugs 1, insbesondere dessen Formteilsegmente 4 bis 10, dieses bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Die Ausführungsbeispiele zeigen mögliche Ausführungsvarianten des Formwerkzeugs 1, insbesondere dessen Formteilsegmente 4 bis 10, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Vor allem können die einzelnen in den Fig. 1; 2, 3, 4; 5, 6 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

## Patentansprüche

1. Verfahren zur Herstellung eines räumlichen Flächengebildes durch Umformen einer flächenhaften, dehnungsarmen Tragstruktur (16) zu einem Vorformling, bei welchem vor dem Umformvorgang die flächenhafte Tragstruktur (16) mit einer Bebinderung versehen wird, nachfolgend der Umformvorgang durch Schließen eines Formwerkzeugs (1) derart durchgeführt wird, dass die Tragstruktur (16) mittels mehrerer Formteilsegmente (4 bis 10) eines ersten Formteils (3) an eine räumlich geformte Formfläche (11) mit Formflächenabschnitten (13, 13a) eines zweiten Formteils (2) angelegt wird und die Tragstruktur (16) in der räumlich verformten Position unter Verfestigung der Behinderung in der umgeformten Position gehalten wird, **dadurch gekennzeichnet, dass** die Tragstruktur (16) vor dem Umformvorgang an zumindest zwei bezüglich des zweiten Formteils (2) gegenüberliegenden Längsrandabschnitten (23, 24) mittels Haltevorrichtungen (25, 26) nahezu ebenflächig gespannt gehalten wird und anschließend die Tragstruktur (16) schrittweise mittels der Formteilsegmente (4 bis 10) des ersten Formteils (3) an die Formflächenabschnitte (13, 13a) des zweiten Formteils (2) angelegt wird, wobei am Beginn des Umformvorgangs der Tragstruktur (16) zuerst ein erstes Formteilsegment (4) des ersten Formteils (3) hin zum zweiten Formteil (2) verstellt wird, welchem ersten Formteilsegment (4) ein erster Formflächenabschnitt (13) des zweiten Formteils (2) zugeordnet ist, der der unverformt gespannt gehaltenen Tragstruktur (16) am nächsten liegend angeordnet ist.

2. Verfahren nach Anspruch 1, **dadurch gekennzeichnet, dass** mit jedem der Formteilsegmente (4 bis 10) zumindest ein eigenes Antriebsorgan (19) verbunden wird und damit jedes der Formteilsegmente (4 bis 10) unabhängig voneinander relativ zum zweiten Formteil (2) verstellt wird.

3. Verfahren nach Anspruch 1 oder 2, **dadurch gekennzeichnet, dass** die Formteilsegmente (4 bis 10) des ersten Formteils (3) an einer gemeinsamen Tragplatte (17) relativ verstellbar bezüglich der Tragplatte (17) an dieser gehalten werden.

4. Verfahren nach Anspruch 3, **dadurch gekennzeichnet, dass** die Tragplatte (17) an der vom ersten Formteil (3) abgewendeten Seite bezüglich des zweiten Formteils (2) angeordnet wird und die Tragplatte (17) zumindest für die Durchführung des Umformvorganges feststehend mit dem zweiten Formteil (2) verbunden wird.

5. Verfahren nach einem der vorhergehenden Ansprüche, **dadurch gekennzeichnet, dass** das erste Formteilsegment (4) im Bereich seiner beiden dem zweiten Formteil (2) als auch der Tragplatte (17) zugewendeten Seiten an zumindest einer Linearführung (20) geführt wird.

6. Verfahren nach einem der vorhergehenden Ansprüche, **dadurch gekennzeichnet, dass** mindestens ein weiteres Formteilsegment (5 bis 10) jeweils für sich an einer eigenen, an der Tragplatte (17) gehaltenen weiteren Linearführung (21) geführt wird.

7. Verfahren nach Anspruch 6, **dadurch gekennzeichnet, dass** das zumindest eine weitere Formteilsegment (5 bis 10) über zumindest eine weitere Führungsanordnung (22) am ersten Formteilsegment (4) in linearer Richtung geführt wird.

8. Verfahren nach einem der vorhergehenden Ansprüche, **dadurch gekennzeichnet, dass** die Tragstruktur (16) nach dem ersten durchgeführten Verstellvorgang des ersten Formteilsegments (4) zwischen dem ersten Formflächenabschnitt (13) des zweiten Formteils (2) und einem diesem gegenüberliegenden Formflächenabschnitt (14) des zweiten Formteilsegments (4) positioniert gehalten wird.

9. Verfahren nach einem der vorhergehenden Ansprüche, **dadurch gekennzeichnet, dass** anschließend an die erste Verstellung des ersten Formteilsegments (4) die Tragstruktur (16) nacheinander mit weiteren Formteilsegmenten (5 bis 10) an die jeweiligen weiteren Formflächenabschnitte (13a) der räumlichen Formfläche (11) des zweiten Formteils (2) angelegt wird, deren Abstand in senkrechter Richtung bezüglich der unverformt gespannt gehaltenen Tragstruktur (16) größer ist als der Abstand des der Tragstruktur (16) am nähesten liegenden ersten Formflächenabschnitts (13).

10. Verfahren nach einem der vorhergehenden Ansprüche, **dadurch gekennzeichnet, dass** jede der Haltevorrichtungen (25, 26) durch mehrere in Richtung des jeweiligen Längsrandabschnittes (23, 24) der Tragstruktur (16) voneinander distanzierte Halteelemente (27) gebildet wird.

11. Verfahren nach Anspruch 10, **dadurch gekennzeichnet, dass** jedes der Halteelemente (27) relativ und unabhängig voneinander verstellbar bezüglich des ersten Formteils (2) an diesem gehalten wird.

12. Verfahren nach Anspruch 10 oder 11, **dadurch gekennzeichnet, dass** das Halteelement (27) mit der daran gehaltenen Tragstruktur (16) während des Verformungsvorganges der Tragstruktur (16) relativ zum zweiten Formteil (2) gleichzeitig in mehrere Raumrichtungen verstellt wird.

13. Verfahren nach einem der vorhergehenden Ansprüche, **dadurch gekennzeichnet, dass** ein Erweichen der Behinderung der Tragstruktur (16) bereits vor und/oder erst während des Umformvorganges und/oder nach Beendigung des Umformvorganges durchgeführt wird.

14. Verfahren nach einem der vorhergehenden Ansprüche, **dadurch gekennzeichnet, dass** die Tragstruktur (16) aus einem elektrisch leitfähigen Werkstoff gebildet wird und das Erweichen der Behinderung durch Beaufschlagung der Tragstruktur (16) mit elektrischer Energie und Umwandlung derselben in thermische Energie durchgeführt wird.

15. Verfahren nach einem der vorhergehenden Ansprüche, **dadurch gekennzeichnet, dass** die Tragstruktur (16) zumindest im Bereich ihrer den Haltevorrichtungen (25, 26) zugewendeten Längsrandabschnitte (23, 24) mit einem zusätzlichen elektrisch leitenden Element versehen wird.

16. Verfahren nach einem der vorhergehenden Ansprüche, **dadurch gekennzeichnet, dass** die Tragstruktur (16) über die die Haltevorrichtung (25, 26) bildenden Halteelemente (27) mit elektrischer Energie beaufschlagt wird.

17. Formwerkzeug (1) zur Herstellung eines räumlichen Flächengebildes durch Umformen einer flächenhaften, dehnungsarmen Tragstruktur (16), mit einem ersten und zumindest einem zweiten Formteil (2, 3), bei dem zumindest ein Formteil (2, 3) aus mehreren Formteilsegmenten (4 bis 10) gebildet ist und die Formteile (2, 3) jeweils räumlich geformte Formflächen (11, 12) mit Formflächenabschnitten (13, 13a, 14) umfassen und das Formwerkzeug (1) von einer Öffnungsstellung hin zu einer Schließstellung verstellbar ist, insbesondere zur Durchführung des Verfahrens nach einem der Ansprüche 1 bis 16, **dadurch gekennzeichnet, dass** am zweiten Formteil (2) im Bereich von einander gegenüberliegenden Längsrandabschnitten (23, 24) der zu verformenden Tragstruktur (16) jeweils eine Haltevorrichtung (25, 26) angeordnet ist und jede der Haltevorrichtungen (25, 26) durch mehrere in Richtung des jeweiligen Längsrandabschnittes (23, 24) der zu verformenden Tragstruktur (16) voneinander distanzierte Halteelemente (27) gebildet ist.

18. Formwerkzeug (1) nach Anspruch 17, **dadurch gekennzeichnet, dass** jedes der Halteelemente (27) relativ und unabhängig voneinander bezüglich des zweiten Formteils (2) an diesem in mehreren Raumrichtungen verstellbar gehalten ist.

19. Formwerkzeug (1) nach Anspruch 17 oder 18, **dadurch gekennzeichnet, dass** zwischen dem Halteelement (27) und dem zweiten Formteil (2) mehrere Führungsvorrichtungen (28, 29) vorgesehen sind.

20. Formwerkzeug (1) nach einem der Ansprüche 17 bis 19, **dadurch gekennzeichnet, dass** mit jedem der Formteilsegmente (4 bis 10) zumindest ein eigenes Antriebsorgan (19) verbunden ist und damit jedes der Formteilsegmente (4 bis 10) unabhängig voneinander relativ zum zweiten Formteil (2) verstellbar ist.

## Claims

1. A method for producing a spatial fabric sheet by forming a planar, low-stretch support structure (16) to a preform, in which the planar support structure (16) is provided with a binding prior to the forming process, the forming process is subsequently carried out by closing a moulding tool (1) in such a manner that the support structure (16), by means of several mould part segments (4 to 10) of a first mould part (3), is placed against a spatially shaped mould surface (11) with mould surface portions (13, 13a) of a second mould part (2), and the support structure (16), in the spatially formed position, is held in the formed position during curing of the binding, **characterized in that** the support structure (16) prior to the forming process is held clamped in a nearly planar state by holding means (25, 26) on at least two longitudinal edge portions (23, 24) oppositely located with respect to the second mould part (2), and subsequently the support structure (16) is stepwisely placed against the mould surface portions (13, 13a) of the second mould part (2) by the mould part segments (4 to 10) of the first mould part (3), wherein, at the beginning of the forming process of the support structure (16), a first mould part segment (4) of the first mould part (3) is initially displaced towards the second mould part (2), which first mould part segment (4) has associated therewith a first mould surface portion (13) of the second mould part (2), which is located closest to the support structure (16) held clamped in the unformed state.

2. A method according to claim 1, **characterized in that** at least a separate drive unit (19) is connected to each of the mould part segments (4 to 10), and hence each of the mould part segments (4 to 10) is displaced relative to the second mould part (2) independently of one another.

3. A method according to claim 1 or 2, **characterized in that** the mould part segments (4 to 10) of the first mould part (3) are held on a collective support plate (17) so as to be relatively displaceable with respect to the support plate (17).

4. A method according to claim 3, **characterized in that** the support plate (17) is arranged on the side facing away from the first mould part (3) with respect to the second mould part (2), and the support plate (17) is fixedly connected to the second mould part (2) at least while carrying out the forming process.

5. A method according to any one of the preceding claims, **characterized in that** the first mould part segment (4) is guided on at least one linear guide (20) in the region of its two sides facing the second mould part (2) and the support plate (17).

6. A method according to any one of the preceding claims, **characterized in that** at least a further mould part segment (5 to 10) each by itself is guided on a separate, further linear guide (21) held on the support plate (17).

7. A method according to claim 6, **characterized in that** at least one further mould part segment (5 to 10) is guided in the linear direction on the first mould part segment (4) via at least one further guide assembly (22).

8. A method according to any one of the preceding claims, **characterized in that** the support structure (16), after having performed the first displacement operation of the first mould part segment (4), is held in position between the first mould surface portion (13) of the second mould part (2) and a mould surface portion (14) of the second mould part segment (4) located opposite the same.

9. A method according to any one of the preceding claims, **characterized in that**, following the first displacement of the first mould part segment (4), the support structure (16) with further mould part segments (5 to 10) is successively placed against the respective further mould surface portions (13a) of the spatial mould surface (11) of the second mould part (2), the distance of which in the perpendicular direction with respect to the support structure (16) held clamped in the unformed state is larger than the distance of the first mould surface portion (13) located closest to the support structure (16).

10. A method according to any one of the preceding claims, **characterized in that** each of the holding means (25, 26) is formed by several holding elements (27) mutually spaced-apart in the direction of the respective longitudinal edge portion (23, 24) of the support structure (16).

11. A method according to claim 10, **characterized in that** each of the holding elements (27) is held on the first mould part (2) so as to be relatively and mutually independently displaceable with respect to the latter.

12. A method according to claim 10 or 11, **characterized in that** the holding element (27) with the support structure (16) held thereon is simultaneously displaced in several spatial directions during the displacement operation of the support structure (16) relative to the second mould part (2).

13. A method according to any one of the preceding claims, **characterized in that** the softening of the binding of the support structure (16) is performed prior to, and/or during, the forming process and/or after having completed the forming process.

14. A method according to any one of the preceding claims, **characterized in that** the support structure (16) is made of an electrically conductive material, and the softening of the binding is performed by supplying to the support structure (16) electric energy and transforming the same into thermal energy.

15. A method according to any one of the preceding claims, **characterized in that** the support structure (16) is provided with an additional electrically conducting element at least in the region of its longitudinal edge portions (23, 24) facing the holding means (25, 26).

16. A method according to any one of the preceding claims, **characterized in that** electric energy is supplied to the support structure (16) via the holding elements (27) forming the holding means (25, 26).

17. A moulding tool (1) for producing a spatial fabric sheet by forming a planar, low-stretch support structure (16), comprising a first and at least a second mould part (2, 3), wherein at least one mould part (2, 3) is formed by several mould part segments (4 to 10) and the mould parts (2, 3) each comprise spatially shaped mould surfaces (11, 12) with mould surface portions (13, 13a, 14), said moulding tool (1) being displaceable from an open position towards a closed position, in particular for carrying out the method according to any one of claims 1 to 16, **characterized in that** a holding means (25, 26) is each arranged on the second mould part (2) in the region of mutually oppositely located longitudinal edge portions (23, 24) of the support structure (16) to be formed, and each of the holding means (25, 26) is formed by several holding elements (27) mutually spaced-apart in the direction of the respective longitudinal edge portion (23, 24) of the support structure (16) to be formed.

18. A moulding tool (1) according to claim 17, **characterized in that** each of the holding elements (27) is held on the second mould part (2) so as to be relatively and mutually independently displaceable with respect to the latter in several spatial directions.

19. A moulding tool (1) according to claim 17 or 18, **characterized in that** several guide devices (28, 29) are provided between the holding element (27) and the second mould part (2).

20. A moulding tool (1) according to any one of claims 17 to 19, **characterized in that** at least a separate drive unit (19) is connected to each of the mould part segments (4 to 10), and hence each of the mould part segments (4 to 10) is displaceable relative to the second mould part (2) independently of one another.

## Revendications

1. Procédé pour la fabrication d'une structure plate spatiale par la mise en forme d'une structure porteuse (16) plane, peu extensible en une préforme, dans lequel la structure porteuse (16) plane est pourvue avant opération de mise en forme d'un liant, l'opération de mise en forme est par la suite réalisée par la fermeture d'un outil de façonnage (1) de telle manière que la structure porteuse (16) est posée, au moyen de plusieurs segments de pièces façonnées (4 à 10) d'une première pièce façonnée (3), au niveau d'une surface façonnée (11) façonnée de manière spatiale, pourvue de sections de surface façonnée (13, 13a) d'une deuxième pièce façonnée (2) et la structure porteuse (16) est maintenue dans la position déformée de manière spatiale en consolidant le liant dans la position mise en forme, **caractérisé en ce que** la structure porteuse (16) est maintenue quasiment de manière tendue à plat avant l'opération de mise en forme au niveau au moins de deux sections de bord longitudinal (23, 24) se faisant face par rapport à la deuxième partie façonnée (2) au moyen de dispositifs de maintien (25, 26), et la structure porteuse (16) est immédiatement après posée progressivement au moyen des segments de pièce façonnée (4 à 10) de la première pièce façonnée (3) au niveau des sections de surface façonnée (13, 13a) de la deuxième pièce façonnée (2), dans lequel au début de l'opération de mise en forme de la structure porteuse (16), d'abord un premier segment de pièce façonnée (4) de la première pièce façonnée (3) est déplacé en direction de la deuxième pièce façonnée (2), une première section de surface façonnée (13) de la deuxième pièce façonnée (2) est associée au premier segment de pièce façonnée (4), laquelle est disposée le plus à proximité de la structure porteuse (16) maintenue de manière tendue sans être déformée.

2. Procédé selon la revendication 1, **caractérisé en ce qu'**au moins un organe d'entraînement (19) propre est relié à chacun des segments de pièce façonnée (4 à 10), et ainsi chacun des segments de pièce façonnée (4 à 10) est déplacé indépendamment les uns des autres par rapport à la deuxième pièce façonnée (2).

3. Procédé selon la revendication 1 ou 2, **caractérisé en ce que** les segments de pièce façonnée (4 à 10) de la première pièce façonnée (3) sont maintenus au niveau d'une plaque porteuse (17) commune de manière à pouvoir être déplacés de manière relative par rapport à la plaque porteuse (17) au niveau de celle-ci.

4. Procédé selon la revendication 3, **caractérisé en ce que** la plaque porteuse (17) est disposée au niveau du côté détourné de la première pièce façonnée (3) par rapport à la deuxième pièce façonnée (2), et la plaque porteuse (17) est reliée à la deuxième pièce façonnée (2) de manière immobile au moins en vue de la réalisation de l'opération de mise en forme.

5. Procédé selon l'une quelconque des revendications précédentes, **caractérisé en ce que** le premier segment de pièce façonnée (4) est guidé, dans la zone de ses deux côtés tournés vers la deuxième pièce façonnée (2) et également vers la plaque porteuse (17), au niveau d'au moins un guidage linéaire (20).

6. Procédé selon l'une quelconque des revendications précédentes, **caractérisé en ce qu'**au moins un autre segment de pièce façonnée (5 à 10) est guidé respectivement en soi au niveau d'un autre guidage linéaire (21) propre maintenu au niveau de la plaque porteuse (17).

7. Procédé selon la revendication 6, **caractérisé en ce que** l'au moins un autre segment de pièce façonnée (5 à 10) est guidé dans une direction linéaire par l'intermédiaire d'au moins un autre ensemble de guidage (22) au niveau du premier segment de pièce façonnée (4).

8. Procédé selon l'une quelconque des revendications précédentes, **caractérisé en ce que** la structure porteuse (16) est maintenue de manière positionnée, après la première opération de déplacement réalisée du premier segment de pièce façonnée (4), entre la première section de surface façonnée (13) de la deuxième pièce façonnée (2) et une section de surface façonnée (14), lui faisant face, du deuxième segment de pièce façonnée (4).

9. Procédé selon l'une quelconque des revendications précédentes, **caractérisé en ce qu'**immédiatement après le premier déplacement du premier segment de pièce façonnée (4), la structure porteuse (16) est placée avec d'autres segments de pièce façonnée (5 à 10) les uns après les autres au niveau des autres sections de surface façonnée (13a) respectives de la surface façonnée (11) spatiale de la deuxième pièce façonnée (2), dont la distance dans la direction verticale par rapport à la structure porteuse (16) maintenue de manière tendue sans être déformée est plus grande que la distance de la première section de surface façonnée (13) la plus proche de la structure porteuse (16).

10. Procédé selon l'une quelconque des revendications précédentes, **caractérisé en ce que** chacun des dispositifs de maintien (25, 26) est formé par plusieurs éléments de maintien (27) tenus à distance les uns des autres en direction de la section de bord longitudinal (23, 24) respective de la structure porteuse (16).

11. Procédé selon la revendication 10, **caractérisé en ce que** chacun des éléments de maintien (27) est maintenu, les uns par rapport aux autres et indépendamment les uns des autres, de manière à pouvoir être déplacé par rapport à la première pièce façonnée (2) au niveau de cette dernière.

12. Procédé selon la revendication 10 ou 11, **caractérisé en ce que** l'élément de maintien (27) est déplacé de manière simultanée dans plusieurs directions spatiales avec la structure porteuse (16) maintenue au niveau de l'élément de maintien, au cours de l'opération de déformation de la structure porteuse (16) par rapport à la deuxième pièce façonnée (2).

13. Procédé selon l'une quelconque des revendications précédentes, **caractérisé en ce qu'**un ramollissement du liant de la structure porteuse (16) est réalisé déjà avant et/ou seulement pendant l'opération de mise en forme et/ou à l'issue de l'opération de mise en forme.

14. Procédé selon l'une quelconque des revendications précédentes, **caractérisé en ce que** la structure porteuse (16) est formée à partir d'un matériau électroconducteur, et le ramollissement du liant est réalisé en soumettant la structure porteuse (16) à l'action d'une énergie électrique et en convertissant cette dernière en énergie thermique.

15. Procédé selon l'une quelconque des revendications précédentes, **caractérisé en ce que** la structure porteuse (16) est pourvue, au moins dans la zone de ses sections de bord longitudinal (23, 24) tournées vers les dispositifs de maintien (25, 26), d'un élément supplément électroconducteur.

16. Procédé selon l'une quelconque des revendications précédentes, **caractérisé en ce que** la structure porteuse (16) est soumise à l'action d'une énergie électrique par l'intermédiaire des éléments de maintien (27) formant le dispositif de maintien (25, 26).

17. Outil de façonnage (1) servant à fabriquer une structure plate spatiale par la mise en forme d'une structure porteuse (16) plane, peu extensible, avec une première et au moins une deuxième pièce façonnée (2, 3), dans lequel au moins une pièce façonnée (2, 3) est formée à partir de plusieurs segments de pièce façonnée (4 à 10), et les pièces façonnées (2, 3) comprennent des surfaces façonnées (11, 12) respectivement façonnées de manière spatiale pourvues de segments de surface façonnée (13, 13a, 14), et l'outil de façonnage (1) peut être déplacé d'une position d'ouverture dans une position de fermeture, en particulier aux fins de la réalisation du procédé selon l'une quelconque des revendications 1 à 16, **caractérisé en ce que** respectivement un dispositif de maintien (25, 26) est disposé au niveau de la deuxième pièce façonnée (2) dans la zone de sections de bord longitudinal (23, 24), se faisant les unes les autres, de la structure porteuse (16) à déformer, et chacun des dispositifs de maintien (25, 26) est formé par plusieurs éléments de maintien (27) tenus à distance les uns des autres en direction de la section de bord longitudinal (23, 24) respective de la structure porteuse (16) à déformer.

18. Outil de façonnage (1) selon la revendication 17, **caractérisé en ce que** chacun des éléments de maintien (27) est maintenu, les uns par rapport aux autres et indépendamment les uns des autres, par rapport à la deuxième pièce façonnée (2) au niveau de cette dernière dans plusieurs directions spatiales.

19. Outil de façonnage (1) selon la revendication 17 ou 18, **caractérisé en ce que** plusieurs dispositifs de guidage (28, 29) sont prévus entre l'élément de maintien (27) et la deuxième pièce façonnée (2).

20. Outil de façonnage (1) selon l'une quelconque des revendications 17 à 19, **caractérisé en ce qu'**au moins un organe d'entraînement (19) propre est relié à chacun des segments de pièce façonnée (4 à 10), et ainsi chacun des segments de pièce façonnée (4 à 10) peut être déplacé indépendamment les uns des autres par rapport à la deuxième pièce façonnée (2).
